# EUROPÄISCHE PATENTANMELDUNG

(11) **EP 3 444 147 A1**
(43) Veröffentlichungstag der Anmeldung: **20.02.2019**
(21) Anmeldenummer: 18020285.5
(22) Anmeldetag: 28.06.2018
(51) Int. Cl.: B60R 21/13

(54) **ÜBERROLLSCHUTZVORRICHTUNG FÜR EIN FAHRZEUG**

(30) Priorität: 17.08.2017 DE 102017118802
(71) Anmelder: Dr. Ing. h.c. F. Porsche AG, 70435 Stuttgart (DE)
(72) Erfinder: Schmitt, Hans-Jürgen, 75417 Mühlacker (DE); Eichinger, Alexander, 91747 Westheim (DE)

(57) **Zusammenfassung**

Überrollschutzvorrichtung (10) für ein Fahrzeug, aufweisend eine Versteifungsstruktur (20), ein in der Versteifungsstruktur (20) zwischen einer Einfahrposition (EP) und einer Ausfahrposition (AP) bewegbar gelagertes Bügelsystem (30) mit wenigstens drei, über Gelenke (32) miteinander verbundenen Schutzbügeln (34), weiter aufweisend eine in der Versteifungsstruktur (20) gelagerte Antriebsvorrichtung (40), welche das Bügelsystem (30) mit einer Antriebskraft für eine Bewegung von der Einfahrposition (EP) in die Ausfahrposition (AP) beaufschlagt und eine Auslöseeinheit (42) aufweist für die Freigabe der Antriebskraft.

## Beschreibung

Die vorliegende Erfindung betrifft eine Überrollschutzvorrichtung für ein Fahrzeug, ein Überrollschutzsystem, aufweisend wenigstens zwei solcher Überrollschutzvorrichtungen sowie ein Verfahren für die Montage einer Überrollschutzvorrichtung.

Es ist bekannt, dass es Fahrzeuge gibt, welche als Cabriolet ausgeführt werden. Sofern diese Fahrzeuge im offenen oder geschlossenen Betriebszustand bewegt werden, muss für den Fall eines Überschlags eine gesonderte Sicherungsfunktion zur Verfügung gestellt werden. Dies ist üblicherweise mit einem sogenannten Überrollbügel gegeben. Neben den bereits bekannten mechanischen, statischen Überrollbügeln es ist auch bekannt, diese Überrollbügel in der jeweiligen Notfallsituation aktiv auszufahren. Insbesondere ist dies gewünscht aus optischen Gründen, um einen statischen Überrollbügel nicht im normalen Betriebszustand in der Silhouette erkennen zu müssen.

Nachteilhaft bei den bekannten aktiven Lösungen ist es jedoch, dass diese üblicherweise entlang einer translatorischen Bewegungsrichtung aus einer eingefahrenen Position in eine ausgefahrene Position ausgefahren werden müssen. Ein solcher Überrollbügel braucht dementsprechend relativ viel Platz, da er sowohl in der eingefahrenen Position als auch in der ausgefahrenen Position die entsprechende geometrische Dimensionierung für die Erfüllung der Schutzfunktion aufweisen muss. Gleiches gilt auch für die nötige Antriebsvorrichtung, um diese aktive Ausschubbewegung durchführen zu können.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise den Platzbedarf zu reduzieren und/oder ein relativ hohes Gewicht ebenfalls zu minimieren.

Voranstehende Aufgabe wird gelöst durch eine Überrollschutzvorrichtung mit den Merkmalen des Anspruchs 1, ein Überrollschutzsystem mit den Merkmalen des Anspruchs 9 sowie ein Verfahren mit den Merkmalen des Anspruchs 11. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Überrollschutzvorrichtung beschrieben sind, selbstverständlich auch im Zusammenhang mit dem erfindungsgemäßen Überrollschutzsystem sowie dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Erfindungsgemäß ist eine Überrollschutzvorrichtung für ein Fahrzeug vorgeschlagen, welche eine Versteifungsstruktur aufweist. An dieser Versteifungsstruktur ist zwischen einer Einfahrposition und einer Ausfahrposition ein Bügelsystem bewegbar gelagert. Dieses Bügelsystem ist mit wenigstens drei, über Gelenke miteinander verbundenen Schutzbügeln ausgestattet. Weiter weist die Überrollschutzvorrichtung eine in der Versteifungsstruktur gelagerte Antriebsvorrichtung auf, welche das Bügelsystem mit einer Antriebskraft für eine Bewegung von der Einfahrposition in die Ausfahrposition beaufschlagt. Diese Antriebsvorrichtung ist mit einer Auslöseeinheit ausgestattet für die Freigabe dieser Antriebskraft.

Erfindungsgemäß wird also eine Überrollschutzvorrichtung vorgeschlagen, welche nicht ein statisches und damit steifes Bügelsystem zur Verfügung stellt, sondern vielmehr ein in sich bewegbares Bügelsystem ausbildet. Das Bügelsystem ist dabei mit zumindest drei Schutzbügeln ausgestaltet, welche miteinander gelenkig verbunden sind. Eine gelenkige Verbindung ist im Sinne der vorliegenden Erfindung insbesondere eine Lagerung zwischen zwei Schutzbügeln, welche eine Relativrotation um die jeweilige Lagerachse bzw. Gelenkachse des verbindenden Gelenks zur Verfügung stellt. Mit anderen Worten können zwei Schutzbügel, welche innerhalb des Bügelsystems über ein Gelenk miteinander verbunden sind, über dieses Gelenk zueinander verkippt werden. Ein solches Bügelsystem bzw. die einzelnen Schutzbügel können auch als Hebelkinematik mit einzelnen Schutzhebeln bezeichnet werden. Dadurch, dass sich hier drei Schutzbügel als Mindestmaß für die Ausführungsform des Bügelsystems zur Verfügung stellen lassen, ist es möglich, ein sogenanntes Viergelenksystem oder Mehrgelenksystem zur Verfügung zu stellen, welches eine komplexe Kinematik mit einfachen strukturellen Bauteilen ermöglicht.

Durch die Ausführungsform eines Bügelsystems mit wenigstens drei einzelnen Schutzbügeln, welche miteinander über Gelenke verbunden sind, wird die Kompaktheit des Gesamtsystems der Überrollschutzvorrichtung deutlich verbessert. So kann eine Relativbewegung innerhalb des Bügelsystems, also der einzelnen Schutzbügel relativ zueinander zwischen der Einfahrposition und der Ausfahrposition definiert werden. Mit anderen Worten kann sozusagen in der Einfahrposition das Bügelsystem eingeklappt sein, so dass ein relativ geringer Platzbedarf mit relativ nah beieinanderliegenden einzelnen Schutzbügeln definiert wird. Sobald eine Notfallsituation eintritt und mithilfe der Antriebsvorrichtung die Antriebskraft beaufschlagt wird, erfolgt eine Bewegung der einzelnen Schutzbügel relativ zueinander, so dass über die Gelenke auch Relativrotationen zwischen den einzelnen Schutzbügeln zur Verfügung gestellt werden. Damit klappt sozusagen das Bügelsystem aus, wobei sich alle wenigstens drei Schutzbügel in eine ausgeklappte Position bewegen. In dieser ausgeklappten Position, welche als Ausfahrposition zu bezeichnen ist, beansprucht nun das gesamte Bügelsystem einen deutlich größeren Platzbedarf und befindet sich in dieser ausgefahrenen Position nun in der Lage, die Schutzfunktionalität eines Überrollbügels in der klassischen Weise zur Verfügung stellen zu können.

Die einzelnen Gelenke zwischen den einzelnen Schutzbügeln sind dabei nicht nur für die Durchführung der beschriebenen Relativrotation zwischen den einzelnen Schutzbügeln ausgestaltet, sondern dienen darüber hinaus auch dafür, die Kraft, welche bei einem Überschlag eines Fahrzeugs in die Überrollschutzvorrichtung eingebracht wird, innerhalb des Bügelsystems abzutragen. Selbstverständlich ist das Bügelsystem selbst, also die äußeren Schutzbügel, ebenfalls gelenkig, insbesondere über ähnliche oder identische Gelenke, an der entsprechenden Versteifungsstruktur gelagert.

Die Versteifungsstruktur ist dabei insbesondere rahmenförmig ausgebildet, da hier die tatsächlich eintretenden Kräfte, welche von der Überrollschutzvorrichtung aufgenommen werden, eingebracht und an die Karosserie des Fahrzeugs weitergeleitet werden können. Eine solche Rahmenstruktur der Versteifungsstruktur kann die später noch erläuterten Seitenwände und/oder Bodenflächen aufweisen, um die gewünschte Stabilität, aber auch die gewünschte Sicherheit mit sich zu bringen.

Um die Bewegung zwischen der Einfahrposition und der Ausfahrposition zur Verfügung stellen zu können, ist in erfindungsgemäßer Weise eine Antriebsvorrichtung vorgesehen. Dabei ist es entscheidend, dass diese Antriebsvorrichtung zumindest eine Richtung der Bewegung zur Verfügung stellen kann, nämlich von der Einfahrposition in die Ausfahrposition. Üblicherweise handelt es sich bei der Aktivierung der Antriebsvorrichtung für eine Überrollschutzvorrichtung um eine Notfallsituation des Fahrzeugs, welche üblicherweise sehr selten auftritt. In dieser Notfallsituation ist es entscheidend, dass mit höchster Sicherheit und möglichst schnell die Aktivierung der Antriebsvorrichtung erfolgt und somit das Bügelsystem sich in die Ausfahrposition bewegen wird. Ob und in welcher Weise mithilfe des Antriebs der Antriebsvorrichtung oder andersartig eine Rückbewegung aus der Ausfahrposition in die Einfahrposition ebenfalls möglich sein soll, ist für die grundsätzliche Funktionsweise in der Notfallsituation hier unerheblich. Es reicht somit aus, wenn die Antriebsvorrichtung einfach und kostengünstig sowie besonders leicht ausgestaltet ist, und sich auf die Bewegung von der Einfahrposition in die Ausfahrposition fokussiert bzw. selbst limitiert.

Um diese Bewegung durchführen zu können, ist die Antriebsvorrichtung in der Lage, eine Antriebskraft auf das Bügelsystem zu beaufschlagen. Üblicherweise sind hier sogenannte Kraftschnittstellen vorgesehen, welche insbesondere mit einer direkten oder indirekten Befestigung der einzelnen Komponenten zueinander einhergeht. Wie später noch erläutert, kann es vorteilhaft sein, wenn die Antriebsvorrichtung die Kraft in eines der Gelenke zwischen zwei benachbarten Schutzbügeln einbringt. Grundsätzlich ist es jedoch auch denkbar, dass in direkter oder indirekter Weise an einer anderen Position eine Einbringung der Antriebskraft von der Antriebsvorrichtung in das Bügelsystem zur Verfügung gestellt wird. Eine solche Möglichkeit wäre zum Beispiel eine separate gelenkige Anordnung innerhalb eines Schutzbügels bzw. an einer indirekt mit dem Bügelsystem verbundenen Bauteilkinematik.

Es kann von Vorteil sein, wenn bei einer erfindungsgemäßen Überrollschutzvorrichtung die wenigstens drei Schutzbügel miteinander in Reihe über die Gelenke verbunden sind, so dass sich insbesondere ein oberer Schutzbügel, ein unterer Schutzbügel und wenigstens ein mittlerer Schutzbügel ausbilden. Dabei weist die Antriebsvorrichtung eine Kraftschnittstelle für die Einbringung der Antriebskraft in das Bügelsystem auf, welche im Bereich eines Gelenks, als insbesondere an einem Gelenk oder in dessen Nähe, des wenigstens einen mittleren Schutzbügels befestigt ist. Wie bereits weiter oben erläutert worden ist, ist üblicherweise eine Befestigung einer solchen Kraftschnittstelle vorgesehen, um die Antriebskraft in direkter oder indirekter Weise in das Bügelsystem einzubringen. Neben anderen Anbindungsformen ist es vorteilhaft, wenn ein bereits vorhandenes Gelenk zwischen zwei benachbarten Schutzbügeln verwendet wird, um mit einer Zusatzfunktion ausgestattet zu werden. Somit dient das Gelenk, an welchem die Kraftschnittstelle der Antriebsvorrichtung angreift, nun nicht mehr nur der Relativrotationsbewegung zwischen den einzelnen benachbarten Schutzbügeln, sondern zusätzlich auch zur gelenkigen Anbindung an der Kraftschnittstelle der Antriebsvorrichtung. In diesem Gelenk wird also zusätzlich zur Ermöglichung der Relativrotation auch die Antriebskraft von der Antriebsvorrichtung in das Bügelsystem einbringbar. Dies erlaubt es, auf weitere separate Anbindungsschnittstellen an dem jeweiligen Schutzbügel sowie zusätzliche Gelenke für diese Kraftschnittstelle zu verzichten und damit das Gesamtsystem kompakter und leichter auszugestalten. Auch die Gesamtkosten werden auf diese Weise für eine Überrollschutzvorrichtung deutlich reduziert.

Ein weiterer Vorteil kann erzielt werden, wenn bei einer erfindungsgemäßen Überrollschutzvorrichtung der untere Schutzbügel einen Stützabschnitt aufweist, welcher sich in der Ausfahrposition des Bügelsystems an einem Gegen-Stützabschnitt abstützt, welcher insbesondere an der Versteifungsstruktur ausgebildet ist. In der Ausfahrposition ist eine Notfallsituation des Fahrzeugs erkannt worden. In dieser Notfallsituation sichert die Überrollschutzvorrichtung gegen eindringende Kräfte eines Überschlags ab. Mit anderen Worten werden in dieser Notfallsituation große Kräfte erwartet, welche auf das Bügelsystem und die einzelnen Schutzbügel einwirken und über die Versteifungsstruktur an die Karosserie weitergeleitet werden müssen. Um dies zu gewährleisten, ist bei dieser Ausführungsform nun eine zusätzliche Kraftübertragungsmöglichkeit von dem Bügelsystem in die Versteifungsstruktur bzw. in die Karosserie des Fahrzeugs gegeben. Der Stützabschnitt fährt in seine Ausfahrposition und wird sich dort vorzugsweise in flächigem Kontakt mit einem entsprechenden Gegen-Stützabschnitt befinden. Dieser Gegen-Stützabschnitt kann Teil der Karosserie des Fahrzeugs sein oder aber auch Teil der bereits beschriebenen Versteifungsstruktur. Mit anderen Worten wird nun in der Ausfahrposition über diesen flächigen Kontakt zwischen dem Stützabschnitt und dem Gegen-Stützabschnitt die Möglichkeit gegeben, einen weiteren Kraftpfad zu eröffnen, über welchen die eindringende Kraft in das Bügelsystem an die Karosserie des Fahrzeugs in direkter Weise oder in indirekter Weise über die Versteifungsstruktur weitergeleitet werden kann. Dies erlaubt es, eine verbesserte mechanische Stabilität zur Verfügung zu stellen und gleichzeitig die Antriebsvorrichtung von der Übertragung solcher eintretenden Unfallkräfte zu entlasten. Dadurch, dass dieser separate Kraftpfad insbesondere einen Großteil der eintretenden Unfallkräfte übertragen kann, kann die Antriebsvorrichtung besonders leicht und kostengünstig ausgeführt werden, da diese sich noch mehr auf die tatsächliche Antriebsfunktionalität konzentrieren kann, und nur im geringen Maße die Unfallkräfte mit in die Karosserie leiten muss.

Ebenfalls von Vorteil ist es, wenn bei einer erfindungsgemäßen Überrollschutzvorrichtung zumindest einer der wenigstens drei Schutzbügel, insbesondere der obere Schutzbügel und/oder der wenigstens eine mittlere Schutzbügel eine L-Form aufweisen. Eine solche L-Form bedeutet also, dass zwischen den beiden Gelenken, mit welchen der jeweilige Schutzbügel an der Versteifungsstruktur und/oder an den benachbarten Schutzbügeln angelenkt ist, zumindest ein Knick vorgesehen ist. Dies erlaubt es insbesondere beim oberen Schutzbügel und/oder beim mittleren Schutzbügel eine größere und breitere Aufstandsfläche zu gewährleisten, so dass im Falle einer Überschlagssituation eines Fahrzeugs eine größere Fläche mit dem Boden in Kontakt gelangt, und somit eine verbesserte Einleitung der Unfallkräfte in das Bügelsystem möglich wird. Gleichzeitig wird die Schutzwirkung der Überrollschutzvorrichtung bei kompakter Bauweise verbessert bzw. erhöht. Nicht zuletzt erlaubt es die L-Form in definierter Weise eine Deformation bereits des Bügelsystems zur Verfügung zu stellen, so dass hier in definierter Weise die Schutzfunktionalität ermöglicht wird und gleichzeitig eine verbesserte und ideale Kraftableitung in die Karosserie des Fahrzeugs zur Verfügung gestellt ist.

Darüber hinaus von Vorteil kann es sein, wenn bei einer erfindungsgemäßen Überrollschutzvorrichtung zumindest einer der wenigstens drei Schutzbügel einen Schwächungsabschnitt aufweist, für eine definierte mechanische Destabilisierung des Bügelsystems. Um in einer Unfallsituation Unfallkräfte abzutragen, ist es üblicherweise erforderlich, in definierter Weise nicht nur den Kraftpfad für die Abtragung der Unfallkräfte zur Verfügung zu stellen, sondern diese auch durch mechanische und plastische Deformation einzelner Bauteile sozusagen aufzulösen bzw. abzuarbeiten. Dies kann bereits im Bügelsystem der erfindungsgemäßen Überrollschutzvorrichtung zumindest teilweise geschehen, wenn in definierter Weise sozusagen Solldeformationsstellen ausgebildet werden. Solche Schwächungsabschnitte können zum Beispiel durch eine gezielte Rippenstruktur und/oder eine gezielte Materialreduktion, zum Beispiel in Form von Ausschnitten oder Lochungen sowie Bohrungen innerhalb des jeweiligen Schutzbügels vorgesehen sein.

Ebenfalls von Vorteil ist es, wenn bei einer erfindungsgemäßen Überrollschutzvorrichtung die Antriebsvorrichtung eine Verriegelungseinheit aufweist, für eine Verriegelung der Antriebsvorrichtung in wenigstens einer ausgelösten Position. Wie bereits mehrfach erläutert worden ist, wird die Antriebsvorrichtung die Antriebskraft zur Verfügung stellen. Dabei ist es üblicherweise erforderlich, dass auch die Antriebsvorrichtung selbst eine Bewegung durchführt. Beispielsweise ist die Antriebsvorrichtung mit einer später noch erläuterten Kombination aus einem Festteil und einem Losteil verbunden bzw. ausgestattet, wobei innerhalb der Antriebsvorrichtung mithilfe einer Federeinheit das Losteil vom Festteil sozusagen weggedrückt bzw. wegbewegt wird, wenn eine Bewegung in die Ausfahrposition erfolgen soll. Dadurch, dass in der Ausfahrposition nun Unfallkräfte über das Bügelsystem abgetragen werden sollen, kann mithilfe einer Verriegelungseinheit die Verriegelung eine zusätzliche Abtragung unabhängig von einer solchen Federeinheit gewährleisten. So ist es auch hier möglich, in der zumindest einen ausgelösten Position einen zusätzlichen Kraftpfad zur Verfügung zu stellen, welcher innerhalb der Antriebseinheit eine Abtragung von Unfallkräften an der Federeinheit vorbei zulässt. Auch dies erlaubt es, eine verbesserte mechanische Festigkeit bzw. Stabilität des Gesamtsystems der Überrollschutzvorrichtung zur Verfügung zu stellen. Dabei ist darauf hinzuweisen, dass diese Verriegelung insbesondere in der ausgelösten Position stattfindet, in welcher auch tatsächlich die Ausfahrposition des Bügelsystems vorliegt. Selbstverständlich ist es jedoch auch möglich, dass zwei oder mehr zusätzliche ausgelöste Positionen mit einer entsprechenden Verriegelung einhergehen, so dass auch bei Teilauslösung bzw. Teilausfahren bei mechanischer Blockade des Bügelsystems eine entsprechende Verriegelung einen zusätzlichen Kraftpfad zur Verfügung stellen kann, um die mechanische Stabilität auch in dieser Teilausfahrsituation des Bügelsystems zur Verfügung stellen zu können.

Ebenfalls von Vorteil ist es, wenn bei einer erfindungsgemäßen Überrollschutzvorrichtung die Antriebsvorrichtung zumindest eine Federeinheit aufweist für die Beaufschlagung des Bügelsystems mit der Antriebskraft in Form einer Federkraft, wobei die Federeinheit sich insbesondere zwischen einem Festteil und einem Losteil der Antriebsvorrichtung erstreckt, welche vorzugsweise teleskopartig zueinander bewegbar sind. Hierbei handelt es sich um eine technisch besonders einfache, kostengünstige und vor allem kompakt ausbildbare Lösung der Antriebsvorrichtung. Das Festteil und das Losteil können zum Beispiel ineinander eingreifen, so dass zum Beispiel in zylindrischer oder prismatischer Weise ein Teleskopausschub möglich wird. Eine Federeinheit ist geschützt und sicher im Inneren solcher zylinderförmigen Losteile und Festteile angeordnet und kann auf diese Weise die Antriebskraft in Form einer Federkraft zur Verfügung stellen. Mit anderen Worten sind also Festteil und Losteil Hülsen, welche sich ineinander relativ zueinander translatorisch bewegen können. Das Festteil stützt sich dabei vorzugsweise gegen die Versteifungsstruktur ab, während das Losteil die entsprechende Krafteinleitung in das Bügelsystem zur Verfügung stellt. Alternativ zu einer Federvorrichtung ist auch der Einsatz einer Gasdruckfeder oder eines Gasgenerators für die Antriebseinheit denkbar.

Ein weiterer Vorteil ist erzielbar, wenn bei einer erfindungsgemäßen Überrollschutzvorrichtung die Versteifungsstruktur eine Hüllenstruktur mit wenigstens zwei Seitenwänden und einer Bodenwand aufweist. Dies dient der weiteren Verstärkung, insbesondere in Form eines Bodenprofils. Selbstverständlich kann auch auf der Oberseite eine Abdeckung vorgesehen sein, welche entweder vollständig den gesamten oberen Bereich des Verstärkungsprofils abdeckt oder aber Abschnitte freilässt, durch welche beim Ausklappen in die Ausfahrposition die einzelnen Schutzbügel hinaustreten können. Selbstverständlich kann die Versteifungsstruktur auch dazu dienen, zumindest teilweise die auftretenden Unfallkräfte aufzufangen und an die Karosserie weiterzuleiten.

Ebenfalls Gegenstand der vorliegenden Erfindung ist ein Überrollschutzsystem für ein Fahrzeug, aufweisend wenigstens zwei erfindungsgemäße Überrollschutzvorrichtungen, wobei die Antriebsvorrichtung der wenigstens zwei Überrollschutzvorrichtungen sich an einer gemeinsamen Abstützachse der Versteifungsstruktur abstützt. Insbesondere sind die beiden Überrollschutzvorrichtungen symmetrisch bzw. spiegelbildlich zueinander angeordnet, so dass sozusagen auf der linken und der rechten Seite bzw. für die Fahrerseite und die Beifahrerseite jeweils eine separate Überrollschutzvorrichtung zusammen ein Überrollschutzsystem ausbilden. Das Abstützen an einer gemeinsamen Abstützachse reduziert die Komplexität des Gesamtsystems und erleichtert vor allem die sichere und punktgenaue Montage. Ein erfindungsgemäßes Überrollschutzsystem bringt damit die gleichen Vorteile mit sich, wie sie bereits im Detail für die erfindungsgemäße Überrollschutzvorrichtung erläutert worden sind.

Weiter vorteilhaft ist es, wenn bei einem erfindungsgemäßen Überrollschutzsystem die beiden Antriebsvorrichtungen an der gemeinsamen Abstützachse mit einem gemeinsamen Befestigungsmittel, insbesondere in Form einer Befestigungsklammer und/oder in Form einer Befestigungsfeder, befestigt sind. Damit wird eine besonders einfache Montage in einem einzigen Schritt möglich. Weiter kann die Abmessung des gesamten Systems weiter reduziert werden, da sich die beiden Antriebsvorrichtungen insbesondere in einer gemeinsamen Ebene befinden. Auf diese Weise wird die Tiefe des Systems mit Bezug auf die Fahrtrichtung reduziert. Auch die Breite des Systems mit Bezug quer zur Fahrtrichtung ist so reduzierbar, da sich die Erstreckung der beiden Antriebsvorrichtungen durch die gemeinsame Abstützmöglichkeit vermindert. Nicht zuletz wird durch das Verwenden der gemeinsamen Abstützung der Anzahl der Bauteile und damit das Gewicht und die Komplexität des Überrollschutzsystems reduziert. Das Befestigungsmittel sichert dabei die beiden Antriebsvorrichtungen in deren Ruhelage. Darüber hinaus wird bei vorgespannter Position der beiden Antriebsvorrichtungen mittels des Befestigungsmittels ein unerwünschtes Klappern in diesem Bereich vermieden. Das Befestigungsmittel greift insbesondere in eine entsprechende Vertiefung, Nut oder Öffnung in der Antriebsvorrichtung und/oder der gemeinsamen Abstützachse ein, um diese Sicherungsfunktionalität zu bilden.

Ein weiterer Gegenstand der vorliegenden Erfindung ist ein Verfahren für die Montage einer Überrollschutzvorrichtung gemäß der vorliegenden Erfindung, aufweisend die folgenden Schritte:
- Montage des Bügelsystems mit wenigstens drei Schutzbügeln,
- Montage der Versteifungsstruktur,
- Zusammenfügen des Bügelsystems und der Versteifungsstruktur zu der Überrollschutzvorrichtung.

Bei einem erfindungsgemäßen Verfahren wird die modulare Bauweise einer erfindungsgemäßen Überrollschutzvorrichtung ausgenützt. So können in einem ersten Montageschritt das Bügelsystem und die Versteifungsstruktur jeweils separat voneinander vormontiert werden. Anschließend werden diese beiden Module, also das Bügelsystem, welches auch als Kinematikmodul bezeichnet werden kann, und die Versteifungsstruktur, welches auch als Rahmenmodul bezeichnet werden kann, zusammengefügt, so dass die gesamte Montage nicht nur schneller und leichter, sondern auch kostengünstig erfolgen kann. Die Endmontage erfolgt insbesondere über das Einfügen von drei Bolzen, welche die entsprechenden Lagerpositionen des Bügelsystems sowie der zugehörigen Schnittstelle der Antriebsvorrichtung darstellen.

Weiter kann bei dem erfindungsgemäßen Verfahren vor der Montage der Versteifungsstruktur mit einem gemeinsamen Befestigungsmittel die Abstützvorrichtungen an einer gemeinsamen Abstützachse befestigt werden. Somit kann die bereits weiter oben erläuterte Sicherungsfunktionalität in der Ruhelage erreicht und wirkungsvoll ein unerwünschtes Klappern vermieden werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine erfindungsgemäße Überrollschutzvorrichtung in der Einfahrposition,
- Fig. 2: die Ausführungsform der Fig. 1 in der Bewegung in die Ausfahrposition,
- Fig. 3: die Ausführungsform der Fig. 1 und 2 in dem weiteren Bewegungsverlauf,
- Fig. 4: die Ausführungsform der Fig. 1 bis 3 in der Ausfahrposition,
- Fig. 5: eine Ausführungsform eines Überrollschutzsystems,
- Fig. 6: die Ausführungsform der Fig. 5 im Teilschnitt,
- Fig. 7: eine Ausführungsform eines Schutzbügels,
- Fig. 8: eine Ausführungsform einer Antriebsvorrichtung in gespannter Position,
- Fig. 9: die Ausführungsform der Fig. 8 in ausgelöster Position,
- Fig. 10: die Ausführungsform der Fig. 8 mit Bezug auf die Verriegelungseinheit,
- Fig. 11: eine Ausführungsform einer Hälfte der Versteifungsstruktur und
- Fig. 12: eine schematische Darstellung eines Verfahrensschritts.

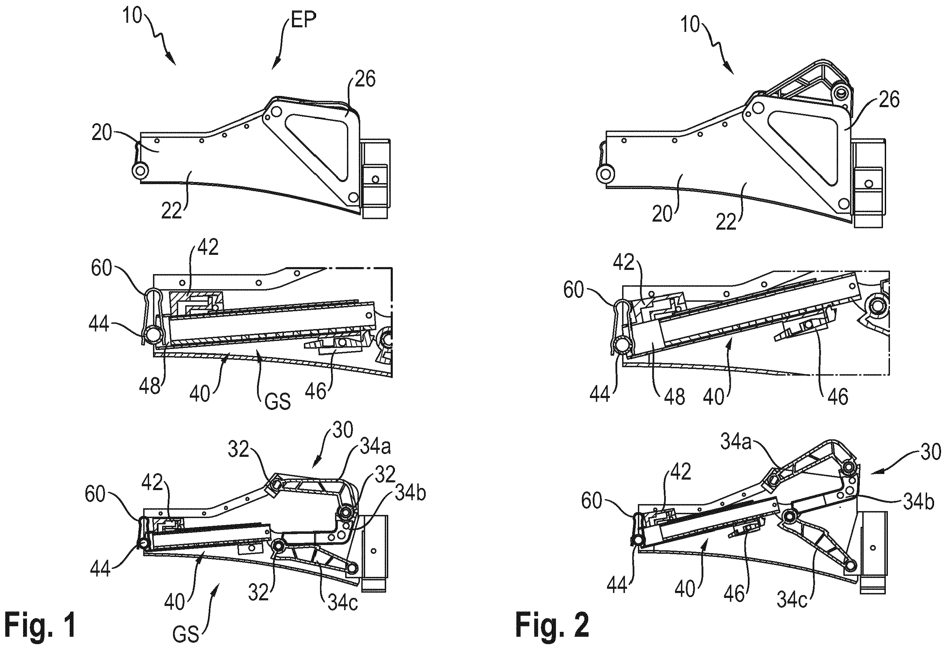

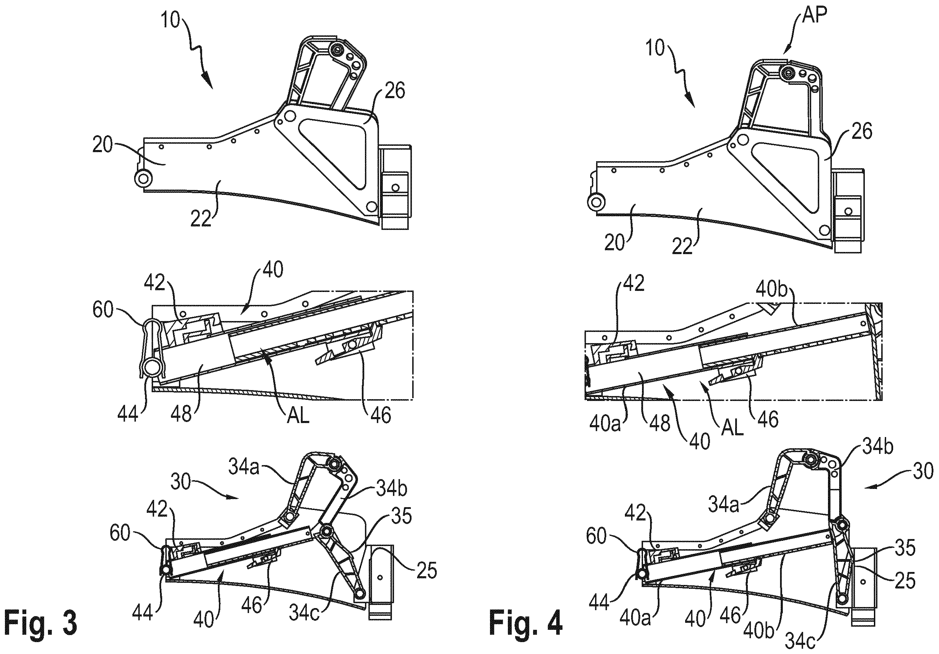

Die Fig. 1 bis 4 zeigen schematisch, wie der Ausfahrvorgang von der Einfahrposition EP gemäß Fig. 1 in die Ausfahrposition AP gemäß Fig. 4 bei einer erfindungsgemäßen Überrollschutzvorrichtung 10 abläuft. Dabei ist jede der Fig. 1 bis 4 mit jeweils drei Teilabbildungen versehen, wobei diese jeweils den identischen Zustand an unterschiedlichen Abschnitten bzw. in unterschiedlichen Ansichten zeigen. Die jeweils oberste Abbildung der Fig. 1 bis 4 zeigt dabei die Frontansicht mit voller Abdeckung. Die unterste Ansicht der Fig. 1 bis 4 zeigt die gleiche Ansicht wie die oberste Ansicht, jedoch mit gelöster Frontabdeckung der Versteifungsstruktur 20. In der Mitte der Fig. 1 bis 4 ist jeweils im Detail der Funktionsverlauf für die Antriebsvorrichtung 40 dargestellt.

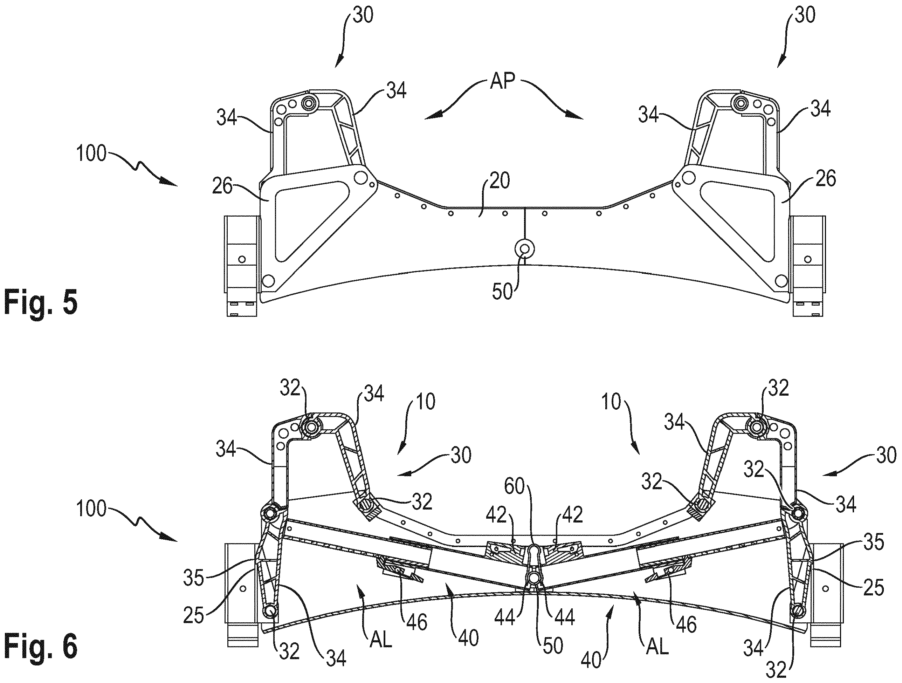

Ausgehend von der normalen Betriebsweise eines Fahrzeugs wird eine erfindungsgemäße Überrollschutzvorrichtung 10 dadurch ausgelöst, dass eine mögliche Überschlagsituation für das Fahrzeug detektiert wird. Dies führt dazu, dass mithilfe der Auslöseeinheit 42 eine Federeinheit 48 in der Antriebsvorrichtung 40 ausgelöst wird, eine entsprechende Antriebskraft freizusetzen. Dies führt dazu, dass die Federeinheit 48 nun auf der einen Seite sich mithilfe der Kraftschnittstelle 44 gegen eine gemeinsame Abstützschnittstelle, wie sie insbesondere als Abstützachse 50 in der Fig. 5 und 6 erläutert wird, abstützt und auf der anderen Seite ein zugehöriges Losteil 40b von dem Festteil 40a der Antriebsvorrichtung 40 wegschiebt. Bei dieser Auslösung wird also eine Antriebskraft freigesetzt, welche nun auf ein entsprechendes Zwischengelenk 32 zwischen dem mittleren Schutzbügel 34b und dem unteren Schutzbügel 34c direkt oder indirekt einwirken kann. Dies führt zu der Bewegung, wie sie insbesondere in den Fig. 1 bis 4 gut zu erkennen ist. Durch die einzelnen Gelenke 32 zwischen den Schutzbügeln 34a, 34b und 34c ist der tatsächliche Bewegungsweg beim Ausklappen in die Ausfahrposition AP vorgegeben. Um dieser Bewegung der einzelnen Schutzbügel 34 des Bügelsystems 30 zu folgen, erfolgt auch eine Bewegung der Antriebsvorrichtung 40 in eine ausgeklappte Position. Aus der gespannten Position GS gemäß Fig. 1 wird also eine ausgelöste Position AL der Fig. 2 bis 4.

Sobald nun sich die einzelnen Schutzbügel 34a, 34b und 34 c in die Ausfahrposition AP bewegt haben, ist ein Schutzmechanismus gegeben. Ein Teil dieses Schutzmechanismus wird dadurch gewährleistet, dass bei dieser Ausführungsform nun ein Schutzabschnitt 35 des unteren Schutzbügels 34c sich flächig an einem Gegen-Stützabschnitt 25 der Versteifungsstruktur 20 abstützt, so dass hier in indirekter Weise eintretende Unfallkraft vom Bügelsystem 30 in die Karosserie des Fahrzeugs eingebracht werden kann.

Anhand der Fig. 5 und 6 wird erläutert, wie in spiegelbildlicher Weise für einen Fahrer und einen Beifahrer eine Kombination von zwei Überrollschutzvorrichtungen 10 zusammengebaut werden kann. Hier ist innerhalb der Versteifungsstruktur 20 nun eine Kombination von zwei Überrollschutzvorrichtungen 10 zu erkennen, wobei sich die beiden Antriebsvorrichtungen 40 nun über die Kraftschnittstellen 44 an einer gemeinsamen Abstützachse 50 abstützen. Die Fig. 5 und 6 zeigen dabei das jeweilige Bügelsystem 30 in der Ausfahrposition AP. Die mechanische Funktionalität für jede dieser beiden Überrollschutzvorrichtungen 10 ist dabei identisch, wie es mit Bezug auf die Fig. 1 bis 4 erläutert worden ist.

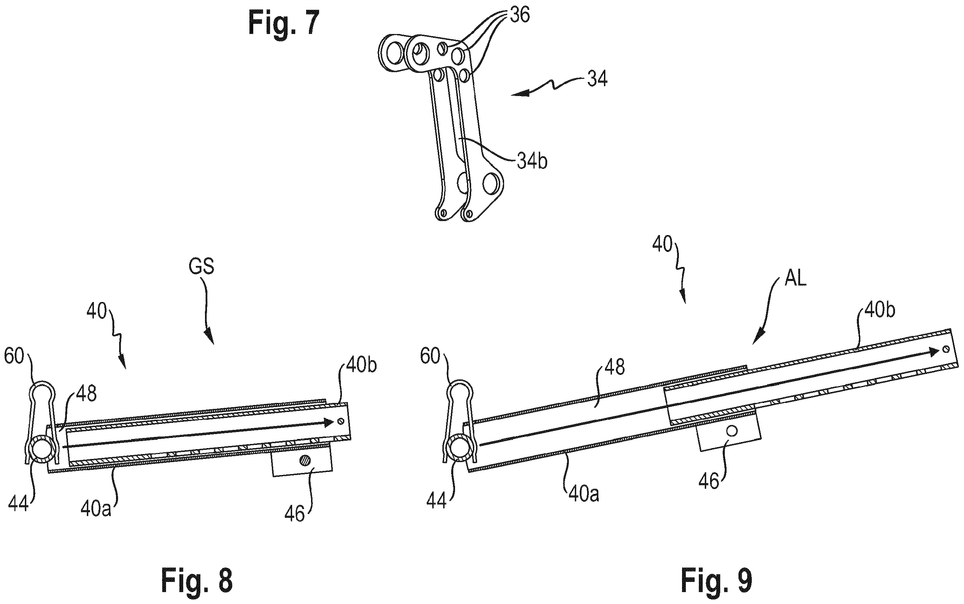

Fig. 7 zeigt eine Möglichkeit, wie mithilfe von Schwächungsabschnitten 36 in Form von Lochungen bzw. Ausschnitten eine definierte Verformungsvorgabe gegeben werden kann, welche bei dem Auftreffen von Unfallkräften von dem Bügelsystem 30 erfüllt werden soll. Beim Einbau werden die Deckplatten der Fig. 7 mit einem mechanisch stabilen Profil zusammengesetzt, um den Schutzbügel 34 auszubilden.

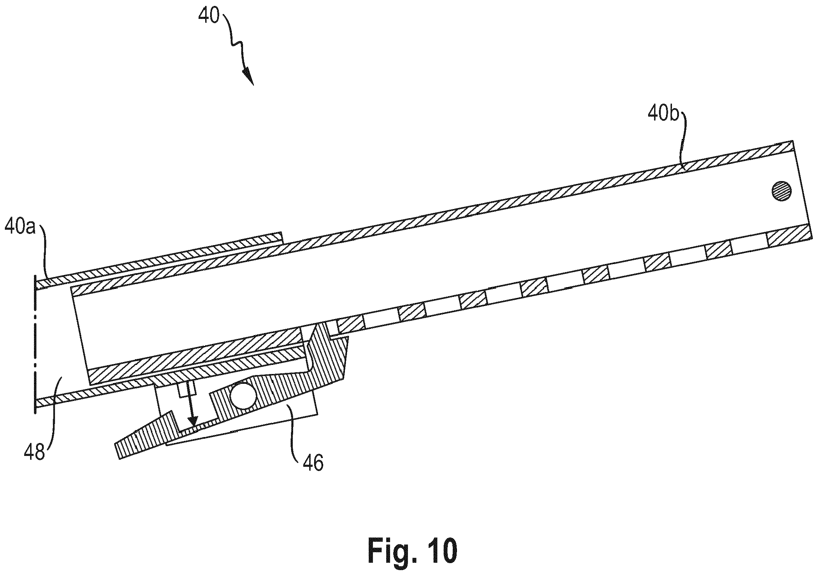

Die Fig. 8 und 9 zeigen nochmals die teleskopartige Ausführungsform eines Festteils 40a und eines Losteils 40b der Antriebsvorrichtung 40. Dabei zeigt die Fig. 8 die gespannte Position und die Fig. 9 die ausgelöste Position der Antriebsvorrichtung 40. Hier ist auch zu erkennen, dass über die Kraftschnittstelle 44 nun mithilfe Befestigungsmittels 60, insbesondere einer einfachen Sicherungsfeder oder einer Sicherungsklammer eine Befestigung und/oder eine Fixierung an einer zugehörigen Abstützachse 50 erfolgen kann. Die Fig. 10 zeigt eine Möglichkeit einer Verriegelungseinheit 46. Hier kann zum Beispiel mithilfe einer Federkraft ein vorbelasteter Hebel mit einer entsprechenden Schräge ausgebildet sein, welcher schrittweise in den unterschiedlichen ausgelösten Positionen AL in zugehörige Lochungen des Losteils 40b einrasten kann. Somit ist es möglich, in der vollausgefahrenen Ausfahrposition AP, aber auch in Zwischenpositionen eine Verrastung bzw. eine Verriegelung zur Verfügung zu stellen, um einen zusätzlichen Kraftpfad an der Federeinheit 48 der Antriebsvorrichtung 40 vorbei zur Verfügung stellen zu können. Alternativ zu einer Lochung wäre zum Beispiel auch eine Zahnstange für eine Verrastung denkbar.

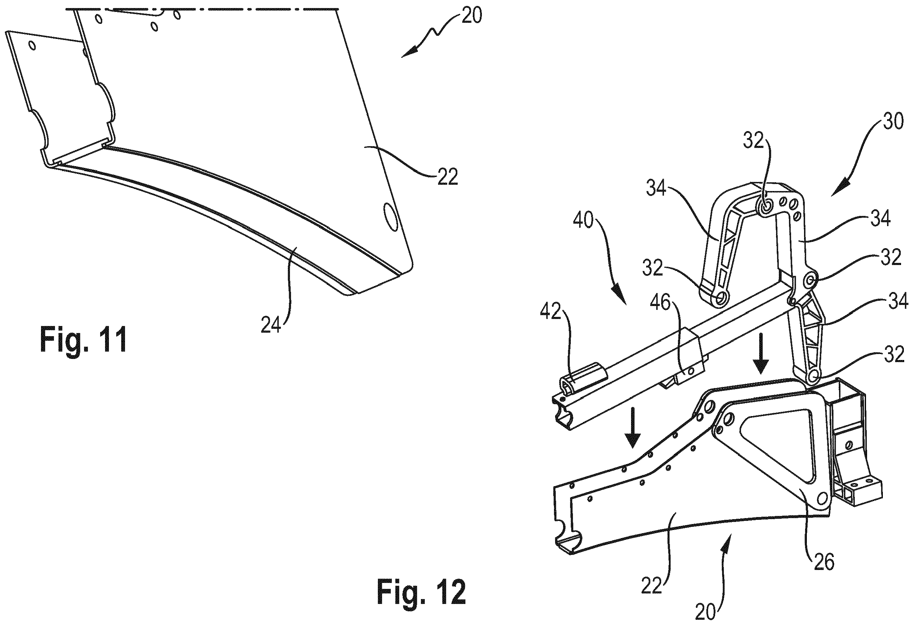

Die Fig. 11 zeigt eine Möglichkeit, wie die Versteifungsstruktur 20 ausgebildet sein kann. So ist hier ein Bodenprofil als Bodenwand 24 vorgesehen, welches an zwei Seiten mit einer jeweiligen Seitenwand 22 abgeschlossen ist. Diese verhindert auch die Einsichtnahme in die gesamte Mechanik der Überrollschutzvorrichtung 10. Selbstverständlich kann die jeweilige Seitenwand, insbesondere im Bereich der Anlenkung des Bügelsystems 30 noch weiter verstärkt werden, zum Beispiel mit einer Verstärkung 26, wie sie in den Fig. 1, 2, 3, 4, 5 und 12 zu erkennen ist.

In Fig. 12 ist dargestellt, wie ein erfindungsgemäßes Montageverfahren ausgebildet sein kann. So ist hier gut zu erkennen, wie zuerst ein Kinematikmodul, bestehend aus dem Bügelsystem 30 und der Antriebsvorrichtung 40 zusammengebaut wird. Parallel erfolgt der Zusammenbau der Versteifungsstruktur 20 vorzugsweise durch Verschweißen der Strukturteile. In einem letzten Montageschritt werden diese die Kinematikmodule und die Versteifungsstruktur zusammengefügt, wie es hier mit den Pfeilen schematisch angedeutet wird. Anschließend werden die Lagerbolzen 32 und die Sicherungsfeder bzw. die Sicherungsklammer montiert. Hier ist nochmals gut zu erkennen, wie nicht nur eine kleine und kompakte Bauweise des gesamten Systems der Überrollschutzvorrichtung 10 möglich wird, sondern darüber hinaus auch eine einfache, kostengünstige und schnelle Montage durchführbar ist.

Die voranstehende Erläuterung der Ausführungsformen beschreibt die vorliegende Erfindung ausschließlich im Rahmen von Beispielen. Dabei können einzelne Merkmale der Ausführungsformen, sofern technisch sinnvoll, frei miteinander kombiniert werden, ohne den Rahmen der vorliegenden Erfindung zu verlassen.

## Patentansprüche

1. Überrollschutzvorrichtung (10) für ein Fahrzeug, aufweisend eine Versteifungsstruktur (20), ein in der Versteifungsstruktur (20) zwischen einer Einfahrposition (EP) und einer Ausfahrposition (AP) bewegbar gelagertes Bügelsystem (30) mit wenigstens drei, über Gelenke (32) miteinander verbundenen Schutzbügeln (34), weiter aufweisend eine in der Versteifungsstruktur (20) gelagerte Antriebsvorrichtung (40), welche das Bügelsystem (30) mit einer Antriebskraft für eine Bewegung von der Einfahrposition (EP) in die Ausfahrposition (AP) beaufschlagt und eine Auslöseeinheit (42) aufweist für die Freigabe der Antriebskraft.

2. Überrollschutzvorrichtung (10) nach Anspruch 1, **dadurch gekennzeichnet, dass** die wenigstens drei Schutzbügel (34) miteinander in Reihe über die Gelenke (32) verbunden sind, so dass sich insbesondere ein oberer Schutzbügel (34a), ein unterer Schutzbügel (34c) und wenigstens ein mittlerer Schutzbügel (34b) ausbildet, wobei die Antriebsvorrichtung (40) eine Kraftschnittstelle (44) für die Einbringung der Antriebskraft in das Bügelsystem (30) aufweist, welche im Bereich eines Gelenks (32), insbesondere an einem Gelenk (32) oder in der Nähe eines Gelenks (32) des wenigstens einen mittleren Schutzbügels (34b) befestigt ist.

3. Überrollschutzvorrichtung (10) nach Anspruch 2, **dadurch gekennzeichnet, dass** der untere Schutzbügel (34c) einen Stützabschnitt (35) aufweist, welcher sich in der Ausfahrposition (AP) des Bügelsystems (30) an einem Gegen-Stützabschnitt (35) abstützt, welcher insbesondere an der Versteifungsstruktur (20) ausgebildet ist.

4. Überrollschutzvorrichtung (10) nach einem der vorangegangenen Ansprüche, **dadurch gekennzeichnet, dass** zumindest einer der wenigstens drei Schutzbügel (34), insbesondere der obere Schutzbügel (34a) und/oder der wenigstens eine mittlere Schutzbügel (34b) eine L-Form aufweisen.

5. Überrollschutzvorrichtung (10) nach einem der vorangegangenen Ansprüche, **dadurch gekennzeichnet, dass** zumindest einer der wenigstens drei Schutzbügel (34) einen Schwächungsabschnitt (36) aufweist für eine definierte mechanische Destabilisierung des Bügelsystems (30).

6. Überrollschutzvorrichtung (10) nach einem der vorangegangenen Ansprüche, **dadurch gekennzeichnet, dass** die Antriebsvorrichtung (40) eine Verriegelungseinheit (46) aufweist für eine Verriegelung der Antriebsvorrichtung (40) in wenigstens einer ausgelösten Position (AL).

7. Überrollschutzvorrichtung (10) nach einem der vorangegangenen Ansprüche, **dadurch gekennzeichnet, dass** die Antriebsvorrichtung (40) zumindest eine Federeinheit (48) aufweist für die Beaufschlagung des Bügelsystems (30) mit der Antriebskraft in Form einer Federkraft, wobei die Federeinheit (48) sich insbesondere zwischen einem Festteil (40a) und einem Losteil (40b) der Antriebsvorrichtung (40) erstreckt, welche vorzugsweise teleskopartig zueinander bewegbar sind.

8. Überrollschutzvorrichtung (10) nach einem der vorangegangenen Ansprüche, **dadurch gekennzeichnet, dass** die Versteifungsstruktur (40) eine Hüllenstruktur mit wenigstens zwei Seitenwänden (22) und einer Bodenwand (24) aufweist.

9. Überrollschutzsystem (100) für ein Fahrzeug, aufweisend wenigstens zwei Überrollschutzvorrichtung (10) mit den Merkmalen eines der Ansprüche 1 bis 8, wobei die Antriebsvorrichtungen (40) der wenigstens zwei Überrollschutzvorrichtungen (10) sich an einer gemeinsamen Abstützachse (50) der Verstärkungsstruktur (20) abstützen.

10. Überrollschutzsystem (100) nach Anspruch 9, **dadurch gekennzeichnet, dass** die beiden Antriebsvorrichtungen (40) an der gemeinsamen Abstützachse (50) mit einem gemeinsamen Befestigungsmittel (60), insbesondere in Form einer Befestigungsklammer und/oder in Form einer Befestigungsfeder, befestigt sind.

11. Verfahren für die Montage einer Überrollschutzvorrichtung (10) mit den Merkmalen eines der Ansprüche 1 bis 8, aufweisend die folgenden Schritte:
- Montage des Bügelsystems (30) mit wenigstens drei Schutzbügeln (34), insbesondere von einem Überrollschutzsystem (100) mit den Merkmalen eines der Ansprüche 1 bis 10,
- Montage der Versteifungsstruktur (20),
- Zusammenfügen des Bügelsystems (30) und der Versteifungsstruktur (20) zu der Überrollschutzvorrichtung (10).

12. Verfahren für die Montage nach Anspruch 11, **dadurch gekennzeichnet, dass** vor der Montage der Versteifungsstruktur (20) mit einem gemeinsamen Befestigungsmittel (60) die Abstützvorrichtungen (40) an einer gemeinsamen Abstützachse (50) befestigt werden.
